# EUROPEAN PATENT SPECIFICATION

(11) **EP 2 513 238 B1**
(45) Date of publication and mention of the grant of the patent: **12.03.2014**
(21) Application number: 10795579.1
(22) Date of filing: 15.12.2010
(51) Int. Cl.: C09D 133/06, C08K 5/29, C08L 63/10

(54) **AQUEOUS COATING COMPOSITION**
WÄSSRIGE BESCHICHTUNGSZUSAMMENSETZUNG
COMPOSITION AQUEUSE DE REVÊTEMENT

(30) Priority: 17.12.2009 US 287251 P; 17.12.2009 US 287244 P
(43) Date of publication of application: 24.10.2012
(73) Proprietor: Coatings Foreign IP Co. LLC, Wilmington, DE 19801 (US)
(72) Inventor: FLOSBACH, Carmen, D-42287 Wuppertal (DE); FIEBERG, Andreas, 45657 Recklinghausen (DE); DREGER, Katharina, 40593 Düsseldorf (DE); KREMPLER, Barbara, A-1140 Wein (AT)
(74) Representative: Maiwald Patentanwalts GmbH
(86) International application number: PCT/US2010/060469
(87) International publication number: WO 2011/084464

(56) References cited:
- WO-A1-2006/026671

## Description

### Field of the Invention

The invention refers to an aqueous coating composition based on a binder combination of (meth)acrylate copolymers and epoxyester resins for the use as top coat providing high corrosion resistance and highly performed coatings.

### Description of Prior Art

Aqueous coating compositions are increasingly used in automotive and industrial coatings for ecological reasons to keep the proportion of organic co-solvents in the water-borne paints as small as possible. Acrylate copolymers are known, in general, as binders in water-borne paints, and they can be manufactured in a one or several step processes. Such paints are described, for example, in WO 2005/070981 and WO2006/118974. WO 2006/026617 discloses a several step process for manufacture of acrylate copolymers for aqueous coating compositions having high stability.

To increase corrosion resistance particularly of directly coated metal surfaces the aqueous coating compositions may comprise epoxyester or combinations of several kinds of binder resins with epoxyesters for the use particularly for electro dip-coatings. EP-A 0032554 discloses a binder resin mixture of acrylic resins and epoxyester resins in combination with alkyd resins which are used in aqueous coating compositions comprising amine or phenolic resins as crosslinking (curing) agents. After neutralization of each manufactured binder resin the binder resins are mixed together to provide a coating composition which is useful as electro dip-coating. Such dip-coating compositions are not useful as top coats due to the lack of weather stability of the cured costings. Furthermore, there is a lack of compatibility between the several neutralized binder resins.

It is further known to use zinc phosphate as anticorrosive pigment in coating compositions. With regard to coating compositions based on polyol binder resins and isocyante crosslinking agents such anticorrosive pigment can reduce the pot-life of the coating composition.

Thus, there is a need for aqueous coating compositions based on (meth) acrylate copolymers which are highly compatible with epoxyester resins for the use as top coatings on metal surfaces. Furthermore, the coatings compositions should give good stability and high performance on appearance, e.g., gloss and flow.

### Summary of the Invention

The present invention refers to an aqueous coating composition comprising
A) a binder combination comprising
   A1) 60 to 90 wt% of at least one water-dilutable (meth)acrylate copolymer comprising
      a) 10 to 80 wt%, preferably 20 to 60 wt%, of at least one reaction product of a monoepoxyester and an an unsaturated acid functional monomer,
      b) 0 to 40 wt%, preferably 10 to 30 wt%, of at least one hydroxyl functional unsaturated monomer which is different from component a),
      c) 1 to 8 wt%, preferably 2 to 6 wt%, of an unsaturated acid functional monomer, and
      d) 0 to 70 wt%, preferably 20 to 50 wt%, of at least one other polymerisable unsaturated monomer, wherein the wt% of a), b), c) and d) are adding up to 100% by weight, and
   A2) 10 to 40 wt% of at least one water-dilutable epoxyester resin, wherein the binder combination is prepared by mixing together both the at least one binder A1) and A2) after their preparation and jointly neutralizing this mixture by adding the appropriate amount of a base and conversion into an aqueous dispersion, wherein the wt% of A1) and A2) are adding up to 100% by weight and
B) at least one isocyanate compound as cross-linking agent,
wherein the wt% of components A) and B) are adding up to 100% by weight.

The aqueous coating composition according to the invention is particularly useful as top coat for direct coating of metal surfaces, particularly un-treated steel surfaces, providing high corrosion resistance and highly performed adhesiveness on the un-treated metal surface as well as high performance on appearance, e.g., gloss and flow.

### Detailed Description of the Invention

The features and advantages of the present invention will be more readily understood, by those of ordinary skill in the art, from reading the following detailed description. It is to be appreciated that those certain features of the invention which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges can be used to achieve substantially the same results as values within the ranges. Also, the disclosure of these ranges is intended as a continuous range including every value between the minimum and maximum values.

The aqueous coating composition of the present invention comprises
A) a binder combination comprising
   A1) 60 to 90 wt% of at least one water-dilutable (meth)acrylate copolymer and
   A2) 10 to 40 wt% of at least one water-dilutable epoxyester resin, and
B) at least one isocyanate compound as cross-linking agent,
wherein the wt% of components A1) and A2) are adding up to 100% by weight.
The aqueous coating composition of the present invention preferably comprises A) 30 to 95 wt% solids of the binder combination and B) 5 to 70 wt% solids of the least one isocyanate compound as cross-linking agent, the wt% of components A) and B) are adding up to 100% by weight.

The term (meth)acrylic in this description is respectively intended to mean acrylic and/or methacrylic.

The term hydroxyl value in this description is defined as the number of mg of potassium hydroxide (KOH) which is equal to the number of mg acetic acid for acetalizing of 1 g of the resin, determined according to DIN 53240.

The term acid value in this description is defined as the mg of potassium hydroxide required to neutralise the acid groups of the polyester, described in DIN EN ISO 2114.

All the number-average molar mass data stated in the present description are number average molar masses determined or to be determined by gel permeation chromatography (GPC) with divinylbenzenecrosslinked polystyrene as the immobile phase, tetrahydrofuran as the liquid phase and polystyrene standards, as defined in ISO 13885-1.

The water-dilutable (meth)acrylate copolymer A1 typically has a hydroxy value of 30 to 250, an acid value of 15 to 50, and a number average molar mass (Mn) of 1000 to 15000, and preferably has a hydroxy value of 60 to 150, an acid value of 5 to 35, and a number average molar mass (Mn) of 1500 to 6000.

The hydroxy functionality of the copolymer A1) is provided by the reaction product of an unsaturated acid functional monomer and a monoepoxyester a) and optionally, by further hydroxy functional unsaturated monomers b). The copolymer A1) is produced by radical polymerization of the aforementioned components a) to d) as described below.

Component a) relates to reaction products of monoepoxyesters and unsaturated acid functional compounds. These monoepoxy esters are preferably glycidyl esters derived from aliphatic saturated monocarboxylic acids with a tertiary or quaternary carbon atom in the alpha position. It is preferred to use glycidyl esters of saturated alpha, alpha-dialkylalkane-monocarboxylic acids with 5 to 13 C atoms in the acid molecule, in particular, preferably, 9 to 11 C atoms in the acid molecule. Examples of glycidylesters are the glycidyl esters derived from versatic acid and the glycidyl esters derived from pivalic acid. The glycidyl ester derived from versatic acid is particularly preferred. Suitable monoepoxyesters of this type are obtainable commercially, for example, under the name of Cardura® (Hexion). Examples of unsaturated acid functional compounds are aliphatic unsaturated monocarboxylic acids such as (meth)acrylic acid, crotonic acid and isocrotonic acid. Maleic acid, fumaric acid and derivatives therefrom can also be used, e.g., reaction products of maleic anhydride with monoalcohols leading to maleic acid half ester-acids. These half ester-acids can also be reacted with the monoepoxyesters. A preferred unsaturated acid functional compound is (meth)acrylic acid.

Further possible components a) are reaction products of tertiary fatty acids with up to 12 carbon atoms and epichlorohydrine as well as reaction products of epoxy functional unsaturated monomers, e.g., glycidyl (meth)acrylate, and acids, e.g., aliphatic saturated monocarboxylic acids with a tertiary or quaternary carbon atom in the alpha position.

Particularly preferred components a) are reaction products of glycidyl esters derived from versatic acid and (meth)acrylic acid.

Component a) is a hydroxy-functional polymerizable reaction product and can be formed during the course of production of the (meth)acrylate copolymers.

Component b) relates to hydroxy-functional olefinic unsaturated monomers, which are different from component a). Examples of component b) are hydroxyalkyl esters with primary or secondary hydroxyl groups derived from alpha, beta-olefinic unsaturated monocarboxylic acids. These can include, for example, hydroxyalkyl esters from acrylic acid, methacrylic acid, crotonic acid and/or iso-crotonic acid. Hydroxyalkyl esters derived from (meth)acrylic acid are preferred. The hydroxyalkyl groups can contain, for example, 1 to 10 C atoms, preferably 2 to 6 C atoms. Examples of suitable hydroxyalkyl esters of alpha, beta-olefinic unsaturated monocarboxylic acids with primary hydroxyl groups are hydroxyethyl (meth)acrylate, hydroxypropyl (meth)acrylate, hydroxybutyl (methacrylate, hydroxyamyl (meth)acrylate and hydroxyhexyl (meth)acrylate. Examples of suitable hydroxyalkyl esters with secondary hydroxyl groups are 2-hydroxypropyl (meth)acrylate, 2-hydroxybutyl (meth)acrylate and 3-hydroxybutyl (meth)acrylate.

Reaction products from hydroxyalkyl (meth)acylates with lactones can also be used for component b). In this way, at least part of the aforementioned hydroxyalkyl esters of alpha, beta-unsaturated monocarboxylic acids can be modified. The modification results from an esterification reaction taking place by opening the lactone ring. During the reaction, new hydroxyl groups are formed in the final phase in the form of hydroxyalkyl ester groups matching the appropriate lactone. The aforementioned are examples of hydroxyalkyl (meth)acrylates that can be used. Suitable lactones are, for example, those that contain 3 to 15 C atoms in a ring, it is possible for the rings to have different subsbtuents. Preferred lactones are gamma-butyrolactone, delta-valerolactone, epsilon-caprolactone, beta-hydroxy-beta-methyl-delta-valerolactone, lambda-laurinlactone or mixtures thereof. Epsilon-caprolactone is particularly preferred. The reaction products preferred are those of one mol of a hydroxyalkyl ester of an alpha, beta-unsaturated monocarboxylic acid and 1 to 5 mol, preferably an average of 2 mols, of a lactone. Modification of the hydroxyl groups of the hydroxyalkyl esters with the lactone can take place before, during or after carrying out the copolymerization reaction.

Component c) relates to radical polymerizable olefinic unsaturated acid functional monomers. Examples of suitable components c) are polymerizable olefinic unsaturated carboxyl-functional monomers, such as, olefinic unsaturated mono- and/or dicarboxylic acids, e.g., (meth)acrylic acid, maleic acid, fumaric acid, crotonic acid and isocrotonic acid as well as the corresponding semi-esters and anhydrides of olefinic unsaturated dicarboxylic acids. The acid residue of these carboxylic acids has generally 1 to 8 C atoms. Unsaturated fatty acids with 8 to 22 C atoms can also be used, such as, for example, linolenic acid, linoleic acid, oleic acid or dehydrated castor acid. The use of (meth)acrylic acid is particularly preferred.

Strong acid functional monomers, such as, methacryloxy ethyl phosphonic acid, sulfoethyl methacrylate and vinyl phosphonic acid can also be used.

Component d) relates to olefinic unsaturated monomers, which differ from monomers a) to c). It can include olefinic unsaturated monomers that, apart from having at least one olefinic double bond, do not contain any other reactive functional groups. Examples of suitable unsaturated monomers with no other functional groups are esters of unsaturated carboxylic acids with aliphatic monohydric branched or linear as well as cyclic alcohols with 1 to 20 C atoms. Examples of unsaturated carboxylic acids are acrylic acid, methacrylic acid, crotonic acid and isocrotonic acid. Esters of (meth)acrylic acid are preferred. Examples of (meth)acrylic acid esters with aliphatic alcohols are methylacrylate, ethylacrylate, isopropylacrylate, tert.-butylacrylate, n-butytacrylate, isobutylacrylate, 2-ethylhexylacrylate, laurylacrylate, stearylacrylate and appropriate methylacrylates. Examples of (meth)acrylic acid esters with cyclic alcohols are cyclohexylacrylate, trimethylcyclohexylacrylate, 4-tert. butylcyclohexylacrylate, isobornylacrylate and appropriate methacrylates. Examples of (meth)acrylic acid esters with aromatic alcohols are benzyl(meth)acrylates.

Examples of further but not preferred suitable unsaturated monomers of d) without other functional groups are vinyl esters, such as, for example, vinyl acetate, vinyl propionate and vinyl esters derived from branched saturated monocarboxylic acids in alpha position, for example, vinyl esters derived from saturated alpha, alpha' dialkylalkane monocarboxylic acids and vinyl esters derived from saturated alpha-alkylalkane monocarboxylic acids each with 5 to 13 carbon atoms, preferably, 9 to 11 carbon atoms in the molecule.

Small amounts of olefinic polyunsaturated monomers can also be used. These are monomers with at least 2 radically polymerizable double bonds. Examples of these are divinylbenzene, 1,4-butanediol diacrylate, 1,6-hexanediol diacrylate, neopentylglycoldimethacrylate, glycerine dimethacrylate.

Examples of further suitable unsaturated monomers without other functional groups are vinylaromatic monomers, for example, styrene, vinyl toluene and/or tertiary butyl styrene.

Component d) may also include olefinic unsaturated monomers with other functional groups, for example, (meth)acrylamides and their derivatives, (meth)acrylonitriles, silane-functional unsaturated monomers, such as, for example, methacryloxypropyl trialkoxysilanes, vinyl trialkoxysilanes, each with, for example, 1 to 5 carbon atoms in the alkoxy group, acetoacetyl-functional unsaturated monomers, such as, for example, acetoacetoxy ethylmethacrylate, unsaturated monomers containing urea groups, such as, for example, ethylene urea ethyl methacrylate and unsaturated monomers containing amino groups, such as, for example, dialkylamino ethyl (meth)acrylates with, for example, 1 to 5 carbon atoms in the alkyl group and heterocyclic monomers, e.g. vinyl imidazole.

Preferably the (meth)(acrylate copolymer A1) comprises as component d) esters of unsaturated carboxylic acids with aliphatic monohydric branched or linear as well as cyclic alcohols with 1 to 20 C atoms and/or vinylaromatic monomers. Preferably the (meth)acrylate copolymer A1) is free of vinyl esters derived from branched saturated monocarboxylic acids in alpha position.

A preferred (meth)acrylate copolymer A1) comprises:
a) 20 to 60 wt% of at least one a reaction product of a monoepoxyester and (meth)acrylic acid,
b) 10 to 30 wt% of at least one hydroxyalkyl ester with primary or secondary hydroxyl groups derived from alpha, beta-olefinic unsaturated monocarboxylic acids,
c) 2 to 6 wt% of at least one an unsaturated acid functional monomer, and
d1) 10-25% by weight of at least one ester of (meth)acrylic acid with aliphatic monohydric branched or linear as well as cyclic alcohols with 1 to 20 C atoms,
d2) 10-25% by weight of vinylaromatic monomers, and d3) optionally other monomers which are different from monomers d1) and d2),
wherein the wt% of components a), b), c), d1), d2) and d3) are adding up to 100% by weight.

The (meth)acrylic copolymer A1) contained in the coating composition according to the invention is produced by radical copolymerization. Radical polymerization is following the usual method by a person skilled in the art.

More specficially, the (meth)acrylate copolymer A1) is prepared by a skew feed polymerization process with at least two feed streams. Skew feed polymerization as used herein means a multi-step reaction wherein products of previous reaction steps are combined with additional reactants in a sequential fashion to yield the desired copolymer. The preferred embodiment of this invention is a two-step skew feed polymerization wherein a first group of monomers are reacted to form an intermediate polymer and a second group of monomers are reacted in the presence of the intermediate polymer to form the copolymer used in this invention. A description of the skew feed polymerization process with at least two feed streams can be found in WO 2006/026617.

For example, a first feed stream comprising a mixture of a first quantity of unsaturated acid-functional monomer, in an equivalent amount to react with monoepoxyester and build the reaction product of monoepoxyester and unsaturated acid-functional monomer, a hydroxyfunctional monomer, a further unsaturated monomer, and an initiator is charged to the reactor over a period of time. After addition of the first feed stream, the reactor contents are rinsed with additional organic solvent. A second feed stream comprising for example a second quantity of the unsaturated acid-functional monomer, in an amount to provide the copolymer with the desired acid number, further unsaturated monomers, additional organic solvent, and additional initiator is charged to the reactor over a period of time.

The total amount of unsaturated acid-functional monomer c) and reaction product of monoepoxyester and unsaturated acid-functional monomer a) can be varied behween the first and second feed streams, but it is essential that the first feed stream comprises the main quantity, namely 60 to 100 wt% of the reaction product of a monoepoxyester and an unsaturated acid functional monomer a), based on the total amount of monomer a) and the lower amount of unsaturated acid functional monomer c), namely, 0 to 30 wt% of the unsaturated acid functional monomer c) based on the total amount of monomer c) and optionally other polymerisable compounds b) and d).

After addition of the second feed stream, which comprises the remaining wt% of each component the reactor contents are typically rinsed with additional organic solvent, held for a period of time at reflux, and rinsed a final time with additional organic solvent. The reactor contents are cooled and a dispersion/emulsion of the (meth)acrylate copolymer A1) can be achieved.

The individual monomers a) to d) are each introduced in such molar amounts that the finished (meth)acrylate copolymer A1) has the hydroxyl and acid numbers defined as mentioned above.

All usual polymerization initiators for radical copolymerization can be considered, such as, aliphatic azo compounds, for example, azobisisobutyronitrile or azobis-methylbutyronitrile, diazylperoxides, for example, dibenzoylperoxide, dialkylperoxides, for example, di-tertiary-butylperoxide or di-tertiary-amylperoxide, alkylhydroperoxides, for example, tertiary-butylhydroperoxide or peresters, for example, tertiary-butylperoxybenzoate. Regulators, for example alcohols, such as, butanol or mercaptanes, such as, dodecylmercaptane, can be used to regulate the molar mass.

Suitable organic co-solvents are *inter alia* water-dilutable monovalent or bivalent alcohols or glycols, for example, ethanol, n-propanol, isopropanol, n-butanol, isobutanol, ethylene glycol, diethylene glycol, triethylene glycol, propylene glycol and glycerine, water-dilutable monoethers derived from polyhydric alcohols, for example methoxypropanol or methoxybutanol, as well as water-dilutable glycol ethers, such as, for example, butylglycol or butyldiglycol.

The water-dilutable epoxyester resin A2) typically has a hydroxy value of 30 to 400, an acid value of 10 to 50, and a number average molar mass (Mn) of 900 to 15000, and preferably has a hydroxy value of 60 to 300, an acid value of 15 to 35, and a number average molar mass (Mn) of 1000 to 6000.

The hydroxy functionality of the epoxyester resin A2) is provided by the reaction of the epoxy groups and the acid groups or by acid catalysed polymerisation of the epoxide.

The water-dilutable epoxyester resin A2) is a phosphoric acid epoxy ester and/or phosphonic acid epoxy ester with an acid number, for example, in a range of 10 to 50, that are obtained by reacting one or more monomeric, oligomeric or polymeric epoxy compound(s) with phosphoric acid or phosphonic acids or their esters or mixtures thereof in the presence of one or more alcohols.

Suitable phosphoric acid and/or phosphonic acid epoxy esters are obtained by reacting one or more monomeric, oligomeric or polymeric epoxy compound(s) with phosphoric acid or phosphonic acids and/or their esters or with mixtures of these acids or their esters in the presence of one or more alcohols. Examples include phosphoric acid, phosphoric acid diethyl ester, phosphoric acid triethyl ester, phosphoric acid dibutyl ester, phosphoric acid tributyl ester, hydroxymethanephosphonic acid, hydroxyethanephosphonic acid, vinylphosphonic acid, allylphosphonic acid or benzylphosphonic acid diethyl ester; o-phosphoric acid is preferably employed. Due to the presence of alcohols during the reaction, mixed esters with low acid numbers of 10 to 50 are formed at least in some cases.

The epoxy compounds have on average at least one, preferably at least two epoxy groups per molecule and an epoxy equivalent weight of 90 to 4000 g/equivs., preferably 150 to 3500 g/equivs., particularly preferably 150 to 3000 g/equivs.

The epoxy compounds may be saturated as well as unsaturated and also aliphatic, cycloatiphatic, aromatic and/or heterocyclic, and may also contain hydroxyl groups. They may furthermore contain such substituents and/or functional groups that do not lead to any interfering secondary reactions under the reaction conditions, such as for example alkyl substituents or aryl substituents and ether groups.

Examples of suitable epoxy compounds are condensation products of epichlorohydrin and bisphenol A, such as for example Epikote® types from Shell, Araldite® from Ciba Geigy, or D.E.R. ®, D.E.M. ®, D.E.H. ® types from Dow Chemical, epoxy group-containing novolaks, glycidyl ethers of polyhydric alcohols, glycidyl esters of polycarboxylic acids, epoxidation products of naturally occurring fats and oils, epoxidised polybutadienes or low molecular weight acrylate resins with side-positional oxirane groups. A detailed list of epoxy compounds that are suitable for the invention is given on pages 247 to 251 of "Lackharze" by Stoye/Freitag, 1996 Carl Hanser Verlag, Munich, Vienna, which is included here by way of reference.

The ratio of the epoxy groups of the epoxy compounds to the number of acid groups of the phosphoric and/or phosphonic acids that are to be reacted therewith is preferably 1 : 1 to 3 : 1.

The reaction of the epoxy compounds with phosphoric acid or phosphonic acid is carried out in the presence of one or more alcohols, optionally with the addition of solvents, for example at temperatures from 80° to 110 °C. The amount of alcohol for the formation of the reaction products present in some cases as mixed esters is chosen for example so that the solids content of the organic phase consisting of epoxy compound, phosphoric acid or phosphonic acid and/or their derivatives and alcohol that is formed before the chemical reaction is in the range from preferably 65 to 85 wt%, particularly preferably from 70 to 80 wt%. The reaction may be carried out for example under gentle refluxing. The preparation of the mixed esters is preferably carried out in the absence of water. The reaction is carried out to an acid number of 10 to 50, preferably 15 to 40.

Suitable alcohols for this reaction include for example aliphatic alcohols, e.g. lower aliphatic alcohols with 1 to 6 carbon atoms such as n-butanol, tert.-butanol, sec.-butanol, isopropanol, n-propanol, methanol, ethanol and/or hexanol, suitable waterdilutable monoethers derived from polyhydric alcohols like methoxypropanol, ethoxypropanol etc.. Suitable solvents that may be used in the reaction are esters, ethers, ketones and aromatic compounds.

According to this invention the binder combination is prepared by mixing together both the at least one binder A1) and A2) after their preparation and jointly neutralizing this mixture by adding the appropriate amount of a base and conversion into an aqueous dispersion. For that the (meth)acrylate copolymer A1) and the epoxyester resin A2) are mixed together in a ratio to provide the above mentioned amounts of the binder combination A) as well as the wt% solids of A) and B) in the final aqueous coating composition of the invention. A part of the solvent in the (meth)acrylate copolymer and the epoxy ester resin can be destilled off under vacuum to reduce the amount of organic solvent in the final dispersion. The (meth)acrylate copolymer A1) and the epoxyester resin A2) of the resulted mixture are then jointly neutralized, partially or wholly, by the addition of the appropriate amount of a base and converted into an aqueous dispersion by normal or inverse dilution with water. The degree of neutralization is in the range of 80 to 110 %, particularly 90 to 100 %.

Examples of bases are the conventional bases such as for example NaOH, KOH, LiOH, ammonia, primary, secondary and tertiary amines such as diethylamine, triethylamine, morpholine; alkanolamines such as diisopropanolamine, dimethylaminoethanol, triisopropanolamine, dimethylamino-2-methylpropanol; quaternary ammonium hydroxides or also mixtures of such neutralising agents.

In consequence, an aqueous dispersion of a binder combination of A1) and A2) can be achieved having a solids content of 35 to 50% of A1) and A2).

The isocyanate compound of component B) of this invention is used as cross-linking agent (hardener) of Component A). Such isocyanate compounds can be selected from the group consisting of diisocyanates, polyisocyanates and urethdiones, as blocked or unblocked compounds.

Examples of the isocyanate compound B) are any number of organic isocyanates with aliphatically, cycloaliphatically, araliphatically and/or aromatically bound free isocyanate groups. The isocyanates are liquid at room temperature or become liquid through the addition of organic solvents. At 23°C, the isocyanates generally have a viscosity of 1 to 6,000 mPas, preferably, above 5 and below 3,000 mPas.

The viscosity is measured by Höppler method known in the art, according to DIN53015.

These isocyanate compounds are familiar to the person skilled in the art and can be obtained commercially.

Examples of diisocyanates and polyisocyanates are isophorone diisocyanate (IPDI), hexamethylene diisocyanate (HDI), toluylene diisocyanate, diphenylmethane diisocyanate, trimethylhexane diisocyanate, cyclohexane diisocyanate, cyclohexanedimethylene diisocyanate, tetramethylenexylylene diisocyanate, dicyclohexylmethane diisocyanate or the trimerization products, for example, aliphatic diisocyanate-based isocyanurates or mixtures thereof. Aromatic diisocyanate compounds may also be present, such as, for example, tolylene diisocyanate (TDI), diphenylalkyl diisocyanates or mixtures thereof. Examples of urethdiones are Vestagon® BF1320 (Degussa), Crelan® EN403 (Bayer).

The diisocyanates, polyisocyanates and urethdiones can be used also in blocked form. Blocking may proceed with conventional agents, e.g., with monoalcohols, glycol ethers, ketoximes, lactams, malonic acid esters, acetoacetic acid esters, for example, ethylene glycol monobutyl ether, butanone oxime, phenol, ethyl acetoacetate, dimethylpyrazole or caprolactam.

These polyisocyanates are familiar to the person skilled in the art and can be obtained commercially.

The preferred polyisocyanates are polyisocyanates or palyisocyanate mixtures with exclusively aliphatically and/or cycloaliphatically bound isocyanate groups with an average NCO functionality of 1.5 to 5, Preferably 2 to 4.

The isocyanates of component B) can also be used in the form of isocyanate-modified resins.

Although not preferred, the isocyanates can be used in combination with co-crosslinkers, e.g., in combination with melamine resins and/or blocked polyisocyanates.

Apart from the hydroxy-functional (meth)acrylic copolymers A1) and the epoxyester resin A2) the coating compositions according to the invention can also contain other hydroxy-functional binders. Examples of these other hydroxy-functional binders are those hydroxy-functional binders known to the person skilled in the art, which are used in the formulation of aqueous coatings. Examples of other hydroxy-functional binders which can be used are hydroxy-functional polyester, alkyd, polyurethane and/or poly(meth)acrylate resins different from the (meth)acrylic copolymers A1) and the epoxyester resins A2). The proportion of other hydroxy-functional binders can amount to 0 to 20 wt% based on the amount of the binder combination of component A) of the invention. The coating compositions can also contain low molecular reactive components, so-called reactive thinners, which are able to react with the cross-linking components, Examples of these are hydroxy- or amino-functional reactive thinners.

The binder combination A) and the isocyanates B) of the coating composition of the invention are used in such proportion that the equivalent ratio of hydroxyl groups of the binder combination A) to the isocyanate groups of cross-linking component B) can be 5:1 to 1:5, for example. preferably, 3:1 to 1:3, and in particular preferably, 1.5:1 to 1:1.5. If other hydroxy-functional binders and reactive thinners are used, as such known in the art, their reactive functions should be taken into account when calculating the equivalent ratio.

The coating compositions according to the invention contain water, for example, in a range of 40 to 70 wt% and possibly small amounts of organic solvents, e.g., up to 10 wt%, based on the entire coating composition, according to the wt% solids of the binder combination A) and the component B) of the aqueous coating composition of the invention as described above.

The organic solvents are solvents used in the paint industry known to the person skilled in the art, for example those which were mentioned previously in the production of the polymers and resins.

The coating composition according to the invention may contain as further components the constituents conventional in coating technology, such as, additives, pigments and/or fillers as known by a person skilled in the art.

Additives are, for example, degassing auxiliaries, flow-control agents, flatting agents, texturing agents, fillers (extenders), catalysts, dyes, anti-oxidant, anti-UV, tribostatic or corona electrostatic charging auxiliaries. Compounds having anti-microbial activity may also be added to the coating compositions.

The crosslinking reaction may be additionally accelerated by the presence in the coating composition according to the invention of catalysts known from thermal crosslinking. Such catalysts are, for example, tin salts, bismuth carboxylate, metal complexes, organo-metallic complexes, zirconium chelate complexes. They may be used, for example, in quantities of 0.01 to 3 wt%, based on the total weight of the coating composition.

The coating composition of this invention may contain transparent, color-imparting and/or special effect-imparting pigments and/or fillers (extenders). All colour and/or special effect-giving pigments of organic or inorganic type used in paints are suitable for pigments. Suitable color-imparting pigments are any conventional coating pigments of an organic or inorganic nature considering their heat stability which must be sufficient to support the curing of the coating composition of the invention. Examples of inorganic or organic color-imparting pigments are titanium dioxide, micronized titanium dioxide, carbon black, azopigments, and phthalocyanine pigments. Examples of special effect-imparting pigments are metal pigments, for example, made from aluminium, copper or other metals, interference pigments, such as, metal oxide coated metal pigments and coated mica. Examples of usable extenders are silicon dioxide, aluminum silicate, barium sulfate, calcium carbonate, magnesium carbonate, micronized dolomite.

The constituents are used in conventional amounts known to the person skilled in the art, for example, based on the total weight of the coating composition, regarding pigments and/or fillers in quantities of 0 to 40 wt%, preferred 0 to 30 wt%, regarding the additives in quantities of 0.01 to 10 wt%, preferred 1 to 5 wit%.

Either transparent or pigmented coating compositions can be produced. In case of a two-component system (when using unblocked isocyanate compound B), the binder components A) containing hydroxyl groups, possibly with pigments, fillers and additives generally used for paint, and the isocyanate component B) may only be mixed together shortly before application. Also, preparation of the coating compositions of the invention can be done using pigment pastes, that means, pigments admixtured with a part of the binder combination, the methods as known in the art. In principle, the coatings can still be adjusted to spray viscosity with water and/or organic solvents prior to application.

The coating compositions according to the invention can be applied using known methods, in particular, by spray application. The coating compositions obtained can be cured at room temperature or forced at higher temperatures, for example, up to 80°C. They can, however, even be cured at higher temperatures of, for example, 80 to 160°C.

The coating compositions, according to the invention, are suitable for automotive and industrial coatings on substrates.

The coating compositions according to the invention are suited for use as transparent or coloured topcoats, basecoats or undercoats such as primer or sealer. Preferably, they can be used as topcoats for direct coating of metal substrate surfaces, particularly un-treated steel substrate surfaces.

The water-dilutable (meth)acrylate copolymers A1) and the epoxyester resin A2) used in the aqueous coating composition of the invention are highly compatible with each other in this aqueous coating composition due to the joint neutralization process during the preparation of the binder combination A) as described above.

The present invention is further defined in the following Examples. It should be understood that these Examples are given by way of illustration only. All parts and percentages are on a weight basis unless otherwise indicated.

### Examples

### Comparative Example 1;

In a reactor with a propeller type of stirrer, a thermometer, a condenser and a monomer/initiator feeding system 200 grams of Cardura ® E10 (Glycidylester of C10 versatic acid available from Hexion) and 90 grams of EPR are loaded and heated to about 150° C. A mixture of 68 grams acrylic acid, 52 grams of HEMA, 160 grams of styrene, 40 grams of Cardura ® E10,10 grams of dicumyl peroxide and 40 grams of EPR is added over 2.5 hours to the reactor while keeping the temperature at 150° C. After the feed, the reactor is held 1 hour at 150° C. Then a mixture of 108 grams of HEMA, 30,4 grams of acrylic acid, 142 grams of ISMA, 5 grams of dicumyl peroxide and 45 grams of EPR are added over 2.5 hours at 150°C, followed by a rinsing step for the feed system of 5 grams of EPR. After the rinsing step, the content of the reactor is kept for 2 hours at 150° C. The reactor content is cooled to 100° C and 100 grams of EPR are distilled off. In a next step 33 grams of dimethylethanolamine are added for a theoretical acid value of 20.5, the amount corrected for the measured acid value.

The polymer blend is diluted with 865 grams of water preheated at about 70° C.

### Test results:

| | |
|---|---|
| solids: | 45.1% |
| acid value: | 33,6 mg KOH/g |
| pH: | 8.2 |

### Comparative Example 2:

In a reactor with a propeller type of stirrer, a thermometer, a condenser and a dropping funnel 334.3 grams of Epikote ® 828 and 123.8 grams of methoxypropanol are heated to 45°C, Then a mixture of 16.3 grams of phosphoric acid and 1.26 grams of deionised water is added. Then the reactor is heated to 60° C and the heating is turned off. After the exothermic reaction the mixture is cooled to 80° C and a mixture of 16.3 grams of phosphoric acid and 2.22 grams of deionised water is added. After the exothermic reaction the mixture is kept at 85°C until the acid value is 32 mg KOH /g. Then 116 grams of methoxypropanol are added, followed by 21 grams of dimethylethanolamine.

### Test results:

| | |
|---|---|
| solids: | 69.4% |
| MEQ-amine: | 65.6 |

### Example 3:

In a reactor with a propeller type of stirrer, a thermometer, a condenser and a dropping funnel 334.3 grams of Epikote® 828 and 123.8 grams of methoxypropanol are heated to 45° C. Then a mixture of 16.3 grams of phosphoric acid and 1.26 grams of deionised water is added. Then the reactor is heated to 60° C and the heating is turned off. After the exothermic reaction the mixture is cooled to 60° C and a mixture of 16.3 grams of phosphoric acid and 2.22 grams of deionised water is added. After the exothermic reaction the mixture is kept at 85°C until the acid value is 32 mg KOH / g. Then 105,7 grams of methoxypropanol are added.

### Test results:

| | |
|---|---|
| solids: | 69.7% |
| acid value: | 31,5 mg KOH/g |

### Example 4:

In a reactor with a propeller type of stirrer, a thermometer, a condenser and a monomer/initiator feeding system 200 grams of Cardura® E10 (Glycidylester of C10 versatic acid available from Hexion) and 90 grams of EPR are loaded and heated to about 150° C. A mixture of 68 grams acrylic acid, 52 grams of HEMA, 160 grams of styrene, 40 grams of Cardura® E10, 10 grams of dicumyl peroxide and 40 grams of EPR is added over 2.5 hours to the reactor while keeping the temperature at 150° C. After the feed, the reactor is held 1 hour at 150° C. Then a mixture of 108 grams of HEMA, 30.4 grams of acrylic acid, 142 grams of IBMA, 5 grams of dicumyl peroxide and 45 grams of EPR are added over 2.5 hours at 150°C, followed by a rinsing step for the feed system of 5 grams of EPR. After the rinsing step, the content of the reactor is kept for 2 hours at 150° C. The reactor content is cooled to 100° C and 207 grams of the resin prepared in Example 3 is added and 122 grams of a mixture of EPR and MPR are distilled off. In a next step 45 grams of dimethylethanolamine are added for the measured acid value of 34 mg KOH/g. The polymer blend is diluted with 1078 grams of water.

### Test results:

| | |
|---|---|
| solids: | 44.9% |
| acid value: | 34,0 mg KOH/g |
| MEQ: | 54,6 |

### Example 5

### Preparation of a Coating Composition based on Example 4 (Invention):

### Part A:

In a vessel with stirrer, 215.0 grams of the resin dispersion from example 4 and 13.0 grams of Disperbyk® 184/52 (available at Byk Chemie) are stirred homogeneously. While stirring 2.0 grams Tego Foamex® 825 are added. 19.8 grams of Aerosil® R 972 (available at Degussa), 33.0 grams of Zincphosphate (Heubach) and 279.1 grams of Blancfixe Micro® (bariumsulfate available from Sachtleben) are gently added. For better grinding viscosity 30.0 grams of water deionized and 10.0 grams of butylglycol are added under stirring. Stirring is kept for 30min at 6000rpm.

Then the material is grinded for 30 minutes until grinding is below 15 µm.

Afterwards all the materials are added while stirring. 349.4 grams of acrylic copolymer dispersion and again 2.0 grams of Tego Foamex® 825 are added. For better flow 4.0 grams of Byk® 346/52 (available at Byk) are also added.

### Part B: Activator composition

20.0 grams butylglycolacetat adding 40.0 grams Bayhydur® 401-70 (isocyanate available at Bayer) and 40.0 grams Easaqua® Wt2102 (isocyanate available at Rhodia) mix till homogeneously.

### Activate by adding 1 part B to 5 parts A and homogenize:

Adjust the viscosity of the activated sample with water deionized to 35-40sec Din 4 mm

### Example 6

### Test Results

In a pretest evaluation glass draw downs are performed as shown in Table 1.

**Table 1:**

| # | **1** | **2** | **3** |
|---|---|---|---|
| **Resin** | Comp. 1 + Comparative 2 | Comparative 1 | Example 4 |
| Glass draw down | Turbid, bits, hazy | clear | clear |

While the mixture of the resin dispersion of Comparative Examples 1 and 2 results in turbid films with specs and bits, the glass draw downs of Comparative Example 1 and Example 4 are glossy and clear. Therefore coatings are prepared as described in Example 5.

Tests of resulted top coats are shown in Table 2.

**Table 2:**

| # | | **2** | **3** |
|---|---|---|---|
| **Gloss** | | 82 | 84 |
| **Salt spray test:** | | | |
| | **120 h** | m5/g5;Ri1 | |
| | **168 h** | | m0-1/g1; R10 |
| | **200 h** | | m0-1/g1; Ri0 |

## Claims

1. An aqueous coating composition comprising
A) at least one binder combination comprising
A1) 60 to 90 wt% of at least one water-dilutable (meth)acrylate copolymer comprising
a) 10 to 80 wt% of at least one reaction product of a monoepoxyester and an unsaturated acid functional monomer,
b) 0 to 40 wt% of at least one hydroxyl functional unsaturated monomer which is different from component a),
c) 1 to 8 wt% of at least one unsaturated acid functional monomer, and
d) 0 to 70 wt% of at least one other polymerisable unsaturated monomer, wherein the wt% of a), b), c) and d) are adding up to 100% by weight, and
A2) 10 to 40 wt% of at least one water-dilutable epoxyester resin, wherein the binder combination is prepared by mixing together both the at least one binder A1) and A2) after their preparation and joint neutralizing this mixture by adding the appropriate amount of a base and conversion into an aqueous dispersion, wherein the wt% of A1) and A2) are adding up to 100% by weight, and
B) at least one isocyanate compound as cross-linking agent, wherein the wt% of components A) and B) are adding up to 10% by weight.

2. The coating composition of claim 1 wherein the at least one water-dilutable (meth)acrylate copolymer of A1) comprising
a) 20 to 60 wt% of at least one reaction product of a monoepoxyester and an unsaturated acid functional monomer,
b) 10 to 30 wt% of at least one hydroxyl functional unsaturated monomer which is different from component a),
c) 2 to 6 wt% of at least one unsaturatedacid functional monomer, and
d) 20 to 50 wt% of at least one other polymerisable unsaturated monomer, wherein the wt% of a), b), c) and d) are adding up to 100% by weight.

3. The coating composition of claim 1 and 2 comprising A) 30 to 95 wt% solids of the at least one binder combination and B) 5 to 70 wt% solids of the least one isocyanate compound as cross-linking agent, the wt% of components A) and B) are adding up to 100% by weight.

4. The coating composition of claims 1 to 3 wherein the water-dilutable (meth)acrylate copolymer A1) has a hydroxy value of 30 to 250, an acid value of 15 to 50, and a number average molar mass (Mn) of 1000 to 15000.

5. The coating composition of claims 1 to 4 wherein the water-dilutable epoxyester resin A2) has a hydroxy value of 30 to 400, an acid value of 10 to 50, and a number average molar mass (Mn) of 900 to 15000.

6. A process for preparation of the aqueous coating composition of claims 1 to 5 comprising the steps
a) preparing a binder combination A) comprising
A1) 60 to 90 wt% of at least one water-dilutable (meth)acrylate copolymer comprising
a) 10 to 80 wt% of at least one reaction product of a monoepoxyester and an unsaturated acid functional monomer,
b) 0 to 40 wt% of at least one hydroxyl functional unsaturated monomer which is different from component a),
c) 1 to 8 wt% of at least one unsaturated acid functional monomer, and
d) 0 to 70 wt% of at least one other polymerisable unsaturated monomer, wherein the wt% of components a) to d) are adding up to 100% by weight, and
A2) 10 to 40 wt% of at least one water-dilutable epoxyester resin, wherein the binder combination is prepared by mixing together both the at least one binder A1) and A2) after their preparation and joint neutralizing this mixture by adding the appropriate amount of a base and conversion into an aqueous dispersion, wherein the wt% of components A1) and A2) are adding up to 100% by weight, and
b) adding at least one isocyanate compound as cross-linking agent B),
wherein the wt% of components A) and B) are adding up to 100% by weight.

7. A substrate coated with the coating composition of claims 1 to 5 and cured.

8. The substrate of claim 7 which is un-treated steel substrate.

## Patentansprüche

1. Wässrige Beschichtungszusammensetzung umfassend:
A) mindestens eine Bindemittelkombination umfassend
A1) 60 bis 90 Gew.-% mindestens eines wasserverdünnbaren (meth)Acrylatcopolymers umfassend
a) 10 bis 80 Gew.-% mindestens eines Umsetzungsprodukts eines Monoepoxyesters und eines ungesättigten säurefunktionalen Monomers,
b) 0 bis 40 Gew.-% mindestens eines hydroxyfunktionalen ungesättigten Monomers, welches von Komponente a) verschieden ist,
c) 1 bis 8 Gew.-% mindestens eines ungesättigten säurefunktionalen Monomers, und
d) 0 bis 70 Gew.-% mindestens eines anderen polymerisierbaren ungesättigten Monomers, wobei die Gew.-%-Anteile von a), b), c) und d) sich auf 100 Gew.-% summieren, und
A2) 10 bis 40 Gew.-% mindestens eines wasserverdünnbaren Epoxyesterharzes, wobei die Bindemittelkombination hergestellt wird durch Zusammenmischen beider aus dem mindestens einem Bindemittel A1) und A2) nach deren Herstellung und gemeinsames Neutralisieren dieser Mischung durch Zusetzen der entsprechenden Menge an Base und Umwandlung in eine wässrige Dispersion, wobei die Gew.-%-Anteile von A1) und A2) sich auf 100 Gew.-% summieren, und
B) mindestens eine Isocyanatverbindung als Vernetzungsmittel, wobei die Gew.-% der Komponenten A) und B) sich auf 100 Gew.-% summieren.

2. Zusammensetzung nach Anspruch 1, wobei das mindestens eine wasserverdünnbare (meth)Acrylatcopolymer nach A1) umfasst:
a) 20 bis 80 Gew.-% mindestens eines Umsetzungsprodukts eines Monoepoxyesters und eines ungesättigten säurefunktionalen Monomers,
b) 10 bis 30 Gew.-% mindestens eines hydroxyfunktionalen ungesättigten Monomers, das von der Komponente a) verschieden ist,
c) 2 bis 6 Gew.-% mindestens eines ungesättigten säurefunktionalen Monomers, und
d) 20 bis 50 Gew.-% mindestens eines anderen polymerisierbaren ungesättigten Monomers, wobei die Gew.-%-Anteile von a), b), c) und d) sich auf 100 Gew.-% summieren.

3. Beschichtungszusammensetzung nach Anspruch 1 und 2, umfassend A) 30 bis 95 Gew.-% Feststoffe der mindestens einen Bindemittelkombination und B) 5 bis 70 Gew.-% Feststoffe der mindestens einen Isocyanatverbindung als Vernetzungsmittel, wobei die Gew.-%-Anteile der Komponenten A) und B) sich auf 100 Gew.-% summieren.

4. Beschichtungszusammensetzung nach den Ansprüchen 1 bis 3, wobei das wasserverdünnbare (meth)Acrylatcopolymer A1) einen Hydroxylwert von 30 bis 250, einen Säurewert von 15 bis 50 und eine Zahlenmittelmolmasse (Mn) von 1000 bis 15000 aufweist.

5. Beschichtungszusammensetzung nach Anspruch 1 bis 4, wobei der wasserverdünnbare Epoxyesterharz A2) einen Hydroxylwert von 30 bis 400, einen Säurewert von 10 bis 50 und eine Zahlenmittelmolmasse (Mn) von 900 bis 15000 aufweist.

6. Verfahren zur Herstellung der wässrigen Beschichtungszusammensetzung der Ansprüche 1 bis 5, umfassend die Schritte:
a) Herstellen einer Bindemittelkombination A) umfassend
A1) 60 bis 90 Gew.-% mindestens eines wasserverdünnbaren (meth)Acrylatcopolymers umfassend
a) 10 bis 80 Gew.-% mindestens eines Umsetzungsprodukts eines Monoepoxyesters und eines ungesättigten säurefunktionalen Monomers,
b) 0 bis 40 Gew.-% mindestens eines hydroxyfunktionalen ungesättigten Monomers, welches von Komponente a) verschieden ist,
c) 1 bis 8 Gew.-% mindestens eines ungesättigten säurefunktionalen Monomers, und
d) 0 bis 70 Gew.-% mindestens eines anderen polymerisierbaren ungesättigten Monomers, wobei die Gew.-%-Anteile von a), b), c) und d) sich auf 100 Gew.-% summieren, und
A2) 10 bis 40 Gew.-% mindestens eines wasserverdünnbaren Epoxyesterharzes, wobei die Bindemittelkombination hergestellt wird durch Zusammenmischen beider aus dem mindestens einem Bindemittel A1) und A2) nach deren Herstellung und gemeinsames Neutralisieren dieser Mischung durch Zusetzen der entsprechenden Menge an Base und Umwandlung in eine wässrige Dispersion, wobei die Gew.-%-Anteile von A1) und A2) sich auf 100 Gew.-% summieren, und
b) Zusetzen mindestens einer Isocyanatverbindung als Vernetzungsmittel B), wobei die summieren.-%-Anteile von den Komponenten A) und B) sich auf 100 Gew.-% summieren.

7. Substrat beschichtet mit der Beschichtungszusammensetzung der Ansprüche 1 bis 5 und ausgehärtet.

8. Substrat nach Anspruch 7, welches unbehandeltes Stahlsubstrat ist.

## Revendications

1. Composition aqueuse de revêtement comprenant
A) au moins une combinaison de liants comportant
A1) 60 à 90 % en poids d'au moins un copolymère de (méth)acrylate diluable à l'eau comprenant
a) 10 à 80 % en poids d'au moins un produit réactionnel d'un monoépoxyester et d'un monomère à fonctionnalité acide insaturé,
b) 0 à 40 % en poids d'au moins un monomère insaturé à fonctionnalité hydroxy qui est différent du composant a),
c) 1 à 8 % en poids d'au moins un monomère à fonctionnalité acide insaturé, et
d) 0 à 70 % en poids d'au moins un autre monomère insaturé polymérisable,
la somme des pourcentages en poids de a), b), c) et d) étant de 100 % en poids, et
A2) 10 à 40 % en poids d'au moins une résine d'époxyester diluable à l'eau,
la combinaison de liants étant préparée par mélange ensemble au moins des deux liants A1) et A2) après leur préparation et neutralisation conjointe de ce mélange par addition de la quantité appropriée d'une base et conversion en une dispersion aqueuse, la somme des pourcentages en poids de A1) et A2) étant de 100 % en poids, et
B) au moins un composé isocyanate servant d'agent de réticulation,
dans laquelle la somme des pourcentages en poids des composants A) et B) est de 100 % en poids.

2. Composition de revêtement selon la revendication 1, dans laquelle l'au moins un copolymère de (méth)acrylate diluable à l'eau de A1) comprend
a) 20 à 60 % en poids d'au moins un produit réactionnel d'un monoépoxyester et d'un monomère à fonctionnalité acide insaturé,
b) 10 à 30 % en poids d'au moins un monomère insaturé à fonctionnalité hydroxy qui est différent du composant a),
c) 2 à 6 % en poids d'au moins un monomère à fonctionnalité acide insaturé, et
d) 20 à 50 % en poids d'au moins un autre monomère insaturé polymérisable,
la somme des pourcentages en poids de a), b), c) et d) étant de 100 % en poids.

3. Composition de revêtement selon les revendications 1 et 2, comprenant A) 30 à 95 % en poids d'extrait sec de l'au moins une combinaison de liants et B) 5 à 70 % en poids d'extrait sec de l'au moins un composé isocyanate servant d'agent de réticulation, la somme des pourcentages en poids des composants A) et B) étant de 100 % en poids.

4. Composition de revêtement selon les revendications 1 à 3, dans laquelle le copolymère de (méth)acrylate diluable dans l'eau A1) présente un indice d'hydroxyle de 30 à 250, un indice d'acide de 15 à 50, et une masse moléculaire moyenne en nombre (Mn) de 1000 à 15000.

5. Composition de revêtement selon les revendications 1 à 4, dans laquelle la résine d'époxyester diluable dans l'eau A2) présente un indice d'hydroxyle de 30 à 400, un indice d'acide de 10 à 50, et une masse moléculaire moyenne en nombre (Mn) de 900 à 15000.

6. Procédé pour préparer la composition aqueuse de revêtement selon les revendications 1 à 5, comprenant les étapes
a) de préparation d'une combinaison de liants A) comportant
A1) 60 à 90 % en poids d'au moins un copolymère de (méth)acrylate diluable à l'eau comprenant
a) 10 à 80 % en poids d'au moins un produit réactionnel d'un monoépoxyester et d'un monomère à fonctionnalité acide insaturé,
b) 0 à 40 % en poids d'au moins un monomère insaturé à fonctionnalité hydroxy qui est différent du composant a),
c) 1 à 8 % en poids d'au moins un monomère à fonctionnalité acide insaturé, et
d) 0 à 70 % en poids d'au moins un autre monomère insaturé polymérisable,
la somme des pourcentages en poids de a) à d) étant de 100 % en poids, et
A2) 10 à 40 % en poids d'au moins une résine d'époxyester diluable à l'eau,
la combinaison de liants étant préparée par mélange ensemble au moins des deux liants A1) et A2) après leur préparation et neutralisation conjointe de ce mélange par addition de la quantité appropriée d'une base et conversion en une dispersion aqueuse, la somme des pourcentages en poids de A1) et A2) étant de 100 % en poids, et
b) ajouter au moins un composé isocyanate servant d'agent de réticulation B),
dans lequel la somme des pourcentages en poids des composants A) et B) est de 100 % en poids.

7. Substrat revêtu de la composition de revêtement selon les revendications 1 à 5 et durci.

8. Substrat selon la revendication 7, qui est un substrat en acier non traité.
